Europäisches Patentamt

European Patent Office

Office européen des brevets

(19)

(11) Publication number: **0 229 416**

**A1**

## (12) EUROPEAN PATENT APPLICATION

(21) Application number: **86202210.0**

(22) Date of filing: **09.12.86**

(51) Int. Cl.⁴ **C04B 14/48 , E04C 5/01**

(30) Priority: **30.12.85 GB 8531899**

(43) Date of publication of application:
**22.07.87 Bulletin 87/30**

(84) Designated Contracting States:
**AT BE CH DE ES FR GB GR IT LI LU NL SE**

(71) Applicant: **N.V. BEKAERT S.A.**
**Bekaertstraat 2**
**B-8550 Zwevegem(BE)**

(72) Inventor: **Moens, Joris**
**Mimosalaan 12**
**B-8500 Kortrijk(BE)**

(74) Representative: **Vandevelde, Willy V.G. et al**
**N.V.Bekaert S.A. Bekaertstrasse 2**
**B-8550 Zwevegem(BE)**

(54) **Reinforcing member for cementitious material.**

(57) A reinforcing element (1) for being mixed in concrete or other cementitious material, and providing a higher reinforcing efficiency. The element comprises a small steel wire piece (2) of which both end regions comprise an anchoring part (3, 4). The anchoring parts are embedded in a jacket of hardened material, such as high strength cement mortar.

FIG.1

EP 0 229 416 A1

## REINFORCING MEMBER FOR CEMENTITIOUS MATERIAL

The invention relates to an elongate reinforcing element adapted to be mixed into cementitious materials, said element comprising a small piece of steel wire. It is known to mix a multiplicity of such wire pieces into cementitious materials such as mortar or concrete or materials where hard inert particles are bound together by the hardening of cement, lime or other hydraulic binder analogous to cement, or mixtures thereof, all such materials being considered hereinafter as being a "cementitious material". Although the description hereinafter will refer to the reinforcement of concrete, it is clear that the invention also applies to the reinforcement of cementitious materials in general. The wire pieces act as reinforcement in structural elements for the building industry, such as tubes, beams, plates or other forms.

In order to be adapted to be mixed for reinforcement purposes in cementitious materials in general, the thickness of the wire pieces will range between 0.15 and 3 mm and the length-to-thickness ratio (or aspect ratio) between 30 and 300. For efficiency reasons however, the usual thickness up to now ranges between 0.3 and 1.7 mm, with an aspect ratio between 50 and 200. By "thickness" of a wire piece is meant the diameter of the circle having the same cross-sectional area as the transverse cross-section of the piece of wire.

It is known to improve the renforcing efficiency of such pieces of steel wire by providing the end regions with an anchoring part. By the end region of such wire piece is meant the part of a quarter of a wire piece length, located at one of both extremities of the wire piece. And such end is provided with an anchoring part : this is a part with anchoring properties due to the form of the wire piece. This can e.g. be a bent or twisted or thickened or roughened part, or a part with any sort of shape irregularity which makes it more difficult to pull the wire piece lengthwise out of the concrete.

It is an object of the present invention to provide an elongate reinforcing element with still further improved reinforcing efficiency with respect to the above wire pieces with anchoring end regions.

The elongate reinforcing element according to the invention is still in the form of such steel wire piece of which both end regions comprise an anchoring part, but is further characterised by the fact that at least said anchoring part at both end regions is embedded in a jacket of hardened material.

Such reinforcing element can then be mixed in a cementitious matrix material, such as mortar or concrete, and poured into a structural element, such as a plate or beam or tube. It was found indeed that the strength of the structural element is mainly determined by the quality of the material of the jacket around the ends of the wire pieces, and not by the quality of the matrix material, so that a cheaper cementitious matrix material, or better adapted to its function, can be used for a same strength. It was found that the quality characteristic to be considered is the crushing strength : it was observed indeed that, at rupture of the structural element, the wire pieces fail by pull-out, not due to deformation of the anchoring part of the wire pieces, but due to the crushing of the concrete at the locations where the undeformed anchoring parts make their way through the concrete. This has led to the concept that it is useless to improve the wire piece, if the concrete or other cemen titious material around the anchoring parts is not improved. It would however be too expensive to make the whole structural element of a concrete or material of such high quality. It is sufficient that only the material which otherwise would be crushed, be made of such high quality. Hence the present proposal to deliver the reinforcing elements to the user, not in the form of a multiplicity of mere steel wire pieces of which both end regions comprise an anchoring part, but in the form of such steel wire pieces of which at least the anchoring parts are already embedded in a jacket of a material in hardened state, having a higher crushing strength than the crushing strength of the matrix material in which it will be mixed. In order to be considered as a "jacket" in the sense of this invention, and not as a mere layer, the thickness of the material around the anchoring parts must be of the same order of magnitude as the dimension of the bending or twist or other deformation providing the anchoring, so that the jacket be adapted to retard the crushing indeed.

Consequently, any reinforcing element with such jacket of any crushing strength will be adapted to improve the strength of a cementitious material of lower crushing strength. The reinforcing element will, more specifically, be adapted to improve the reinforcement of conventional concrete, when the hardened jacket material has a higher crushing strength than a conventional concrete, as determined hereinafter in a standard test with a standard conventional concrete.

The material for the jacket will preferably be a hardened cementitious material, and its crushing strength can be improved by using compact cement mortar of fine granulometry. To this end, the proportion of cement can be raised above 35 %, using e.g. a high resistant Portland cement, and furthermore by using fillers with hydraulic binding action such as fly ash and pozollana. The inert fillers, such as fine sand, ground limestone or quartz may be chosen with a granulometry as fine as possible, e.g. 50 micron on an average or less, not exceeding 250 micron. A minimum necessary amount of water is used for the hydraulic binding action, and for this reason, the cement mortar is preferably compacted around the wire pieces by pressure rather than by vibration. The jackets of hardened material may themselves be provided with surface formations such as ribs to improve the anchoring effect with respect to the surrounding concrete or other cementitious material.

Any other suitable hardened materials can however be used for the jacket, e.g. polymer material such as epoxy-resins or methylmetacrylates formed by thermosetting which may be provided with e.g. a sand or talc to reduce cost, or made of any other hardened material (i.e. a material adapted to be deformed in soft state into its final form, and to harden afterwards, said material being in its hard state).

The jacket material must not necessarily cover only the anchoring parts at the ends of the wire piece. It will preferably cover the wire piece over its whole length, so that the reinforcing element has the aspect of a rod of jacket material with a steel wire core, the rod having a much lower aspect ratio than the wire piece. In this form, the mixability is no problem any more.

The steel wire pieces used for the invention will preferably be made of a steel having a tensile strength of more than 1200 Newton/mm². Without using the invention it was useless indeed to use steel of such high tensile strength, because the wire failed by crushing of the concrete and not by deformation of the steel. By improving now the material around the anchoring ends of the wire pieces, it makes now sense to improve the tensile strength of the steel also. And a higher tensile strength for the steel allows in its turn to use wire pieces of larger dimension (i.e. lengths in a range of 8 -15 cm instead of the conventional range 3 -8 cm) without loosing efficiency.

Embodiments of reinforcing elements, and examples of an apparatus and process for forming the same will now be described, by way of example only, with reference to the accompanying drawings, wherein :

Figure 1 illustrates a first reinforcing member according to the invention.

Figure 2 illustrates a second reinforcing member according to the invention.

Figure 3 illustrates an apparatus for producing such reinforcing members.

Figure 4 shows the standard pull-out test loading.

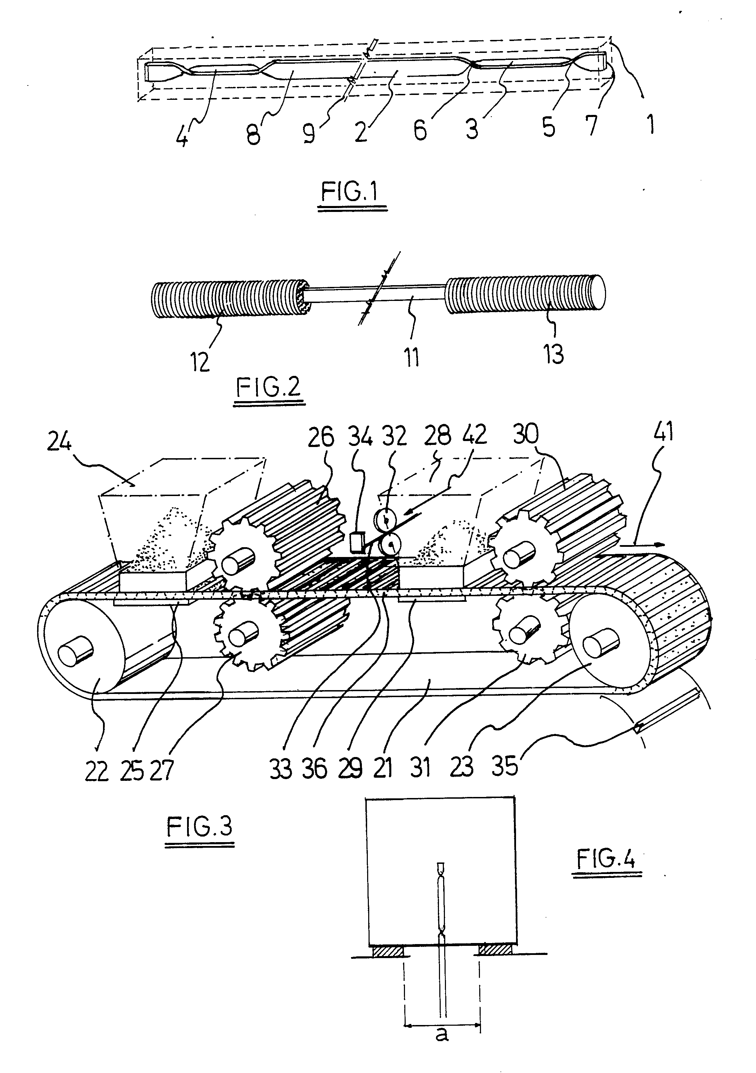

Figure 1 shows, in dotted lines, the external view of a reinforcing element 1, and in full lines, the piece 2 of steel wire that is embedded within the element. This steel wire piece has a rectangular cross-section of 0.8 x 2 mm and its length is 10 cm. Both end regions of the steel wire piece comprise an anchoring part, 3 and 4 respectively, in the form of a first quarter twist 5 at 4 mm from the corresponding free end 7, and a second quarter twist 6 in the opposite sense at 18 mm from the same end 7. Each quarter twist extends over 2 mm of the length of the wire piece. The straight part 8 of the wire between its ends is not shown in full in Figure 1, but has been interrupted, as shown by interruption line 9, indicating that lines as drawn are in the prolongation of each other, in order to show the anchoring part in more detail. This wire is made of steel of 0.65 % carbon content and work hardened by cold rolling to 2050 N/mm². The wire piece is embedded in a thick hardened cement mortar jacket, so that the element has the appearance of a rod 1 with a square transverse section of 14 mm². The composition of the mortar is as follows : per part of cement (Portland CP40) : 1 part of quartz filler (average grain size 50 micron, not exceeding 250 micron), 0.015 part of naphtalene sulphonic acid formaldehyde condensate as a superplasticizer and water reducing agent, and 0.28 parts of water, compacted under pressure.

Figure 2 shows another form of reinforcing element, comprising a wire piece 11, of the same shape and material as in Figure 1, but where only the end regions having the twists in the wire are covered with a cement mortar jacket 12, respectively 13. In this embodiment, the jackets have however a circular cross-section and the external surface is provided with circumferential ribs in order to improve the grip on the surrounding concrete.

The reinforcing elements can be made by means of an apparatus which is shown - schematically in Figure 3. This apparatus comprises a flexible endless toothed belt 21 running between two rollers 22 and 23. This endless belt is driven so that its upper part runs in the direction of the arrow 41. It passes successively between a supply box 24 and support plate 25, between two toothed rollers 26 and 27, between a second supply box 28 and support plate 29 and between two further toothed rollers 30 and 31. The teeth of the rollers 26, 27, 30 and 31 fit into the channels between the teeth of the endless belt. The bottoms of the supply boxes 24 and 28 are open and are in close contact with the endless belt. The boxes 24 and 28 are filled with cement mortar, so that the transverse channels defined between the teeth of the belt are filled with cement mortar when these channels pass between the box and its corresponding support plate. In order to avoid the cement mortar escaping from the channels, the toothed belt is provided with a rim 36 on either side. The apparatus further comprises a feeding device 32 for a continuous steel wire 33 which is already appropriately deformed to provide the anchoring parts (not shown). As the respective channels of the endless belt come into position, a pair of rollers of the feeding device feed the wire in the direction of the arrow 42 over a length which is equal to the width of the belt, and this length is cut off by cutter 34 and thus falls in the corresponding channel.

In operation, a particular channel initially passes between the first supply box 24 and support plate 25, and is filled with cement mortar. It then passes between the toothed rollers 26 and 27 which compress the cement mortar. Thereafter, it passes the feeding device 32 where a wire piece falls in the channel as explained above, and the channel then passes between the second supply box 28 and support plate 29 where it is again filled, and further passes between toothed rollers 30 and 31 and which again compress the cement mortar. Finally, when passing over the roller 23, the channel releases the cement rod 35 that has been formed.

The jacket material is considered to have a higher crushing strength than a conventional concrete in the sense of this invention, where this appears to be the case in a standard comparative pull-out test with a standard conventional concrete as defined hereunder.

### STANDARD COMPARATIVE PULL-OUT TEST :

-Test samples : concrete cubes of 50 x 50 x 50 mm. In the centre of one face of the cube, and perpendicular to that face : one wire piece which is for 28 mm embedded in the cube and the remainder protrudes perpendicularly out of the cube (Figure 4).

-Loading : The cube is laid on a flat support with a circular opening "a" of 30 mm, with the face having the protruding wire piece facing downwardly, the wire passing through the centre of the opening. The pulling force is exerted downwardly - (Figure 4).

-Standard concrete as referred to above : per part of cement (Portland type P40) : 1.5 parts of aggregate 0-4 mm, 1.5 parts of aggregate 4-7 mm, 1.5 parts of aggregate 7-14 mm, 0.6 parts of water, the mixture being compacted on a vibrating table for 60 seconds. Hardening for 7 days is moisture room.

-Testing procedure for the reinforcing element : A test sample is made with the reinforcing element to be tested, i.e. with its jacket and so that the wire piece is for 28 mm embedded in the cube of standard concrete as shown in Figure 4. The pull-out force F is measured in Newtons (average of 4 samples). A second test sample is made with a same reinforcing element, but omitting the jacket, and so that the wire piece is embedded in a similar cube of standard concrete. The pull-out force $F_0$ is measured in Newton (average of 4 samples).

-Test result : the jacket material is considered to have a higher crushing strength than a conventional concrete in the sense of this invention, when $F/F_0 > 1$. Preferably $F/F_0 > 1,25$.

-Example : Reinforcing elements tested : Type A : wire piece of the same dimensions, composition and form as in Figure 1, surrounded with cylindrical jacket of 4 mm diameter of a cement mortar of the same composition as given for the example of Figure 1, except for the water content, which is 0.35 parts per part of cement. External surface of jacket provided with small helicoidal grooves. $F = 2508$ N, $F_0 = 1935$ N.

Type B : same wire pieces as for type A, but surrounded by jacket of square cross-section 5 x 5 mm. Same cement mortar composition as for type A, except for the water content, which is 0.29 parts per part of cement. Smooth surface of jacket. $F = 2663$ N, $F_0 = 1935$ N.

Type C : the same type as type B, but surface of jacket provided with grooves as in Figure 2. $F = 2717$ N, $F_0 = 1935$ N.

The following test was further conducted :

### BENDING TEST :

-Test samples : beams of rectangular cross-section
100 x 150 mm,
length 400 mm.

-Loading : flexure, span 350 mm symmetrical, broadest side of beam disposed horizontally, midpoint loading vertical.

-Concrete composition : standard concrete as for the standard comparative pull-out test, but with reinforcing elements added in an amount representing 25 kg/m³ of steel, and hardened for 14 days in moisture room.

-Reinforcing elements tested :
Type A : wire pieces of the same dimension, composition and forms as in Figure 1, without jacket.

Type B : wire pieces as for Type A, with jacket over the whole length in the form of a circular rod of 13,3 mm² transverse section of a cement mortar of the same composition as for Figure 1.

Type C : round wire pieces with a length of 60 mm and a diameter of 0.8 mm and of a carbon composition of 0.08% and a tensile strength of 1200 N/mm². Both end regions have a first bend of 60° over 1 mm at 3 mm from the free end, and a second bending of 60° over 1 mm in the same plane, but in opposite sense at 7 mm from the same free end. Without jacket.

Type D : wire pieces as for Type C, with jacket of the same type as for Type B.

-Results : $F_p$ = post crack tensile strength - (Newton/mm²)

A : $f_p$ = 4,2

B : $f_p$ = 10,0

C : $f_p$ = 3,5

D : $f_p$ = 4,3

It is clear that the invention is not limited to the sort of wire piece used, in so far as both ends of the wire piece comprise said anchoring part. By "wire piece" is consequently not meant a piece of drawn wire which has been transversely cut. It can also be obtained by transversely cutting a steel strip, having a width equal to the length of the wire pieces, at distances equal to the thickness, or in any other way. Nor is it necessary that only the both end regions have an anchoring part. The wire pieces may also have anchoring deformations at other locations along their lengths, and may also be crimped over their whole length.

The jacket or jackets need not necessarily have a circular or square cross-section, in which the wire cross-section is located in the centre, in so far as it retards the anchoring ends to crush the surrounding material. The cross-sectional area of the jacket may typically range from 4 to 100 times the transverse cross-section of the wire, a preferred range being from 8 to 50, and a particularly preferred range being from 10 to 30. The external surface of the jacket can be provided or not with ribs or other sorts of surface irregularity or roughness. The elements need not necessarily be made by the process of individual compression such as that shown above, but can be made, for example, by continuous extrusion of the jacket around the wire piece. It can also be made by dipping the end of the wire piece, or the whole piece, in a paste of material which hardens afterwards.

Thus, any modifications to the specific features described herein may be apparent to those skilled in the art and the disclosure hereof is intended to encompass such modifications.

## Claims

1. An elongate reinforcing element adapted for mixing into a cementitious material, said member comprising a piece of steel wire of which both end regions comprise an anchoring part, characterized by the fact that at least said anchoring part at both end regions is embedded in a jacket of a hardened material.

2. A reinforcing element according to claim 1, characterized by the fact that said hardened material has a higher crushing strength than a conventional concrete.

3. A reinforcing element according to any one of claims 1 and 2, in which said hardened material is a cement mortar.

4. A reinforcing element according to any one of claims 1 and 2, in which said hardened material is a polymer.

5. A reinforcing element according to any one of claims 1 to 4, in which the steel of said steel wire piece has a tensile strength of more than 1200 Newton/mm².

6. A structural element comprising a multiplicity of reinforcing elements embedded in a cementitious matrix material, characterized by the fact that said reinforcing elements are of the sort as claimed in any one of claims 1 to 5.

7. A structural element according to claim 6, characterized by the fact that the hardened material of the jacket has a higher crushing strength than said cementitious matrix material.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 043 055  (A. ROSSAK) <br> * Claims 1,2 * | 1,2,4 | C 04 B   14/48 <br> E 04 C    5/01 |
| Y | | 1-3 | |
| | --- | | |
| Y | CHEMICAL ABSTRACTS, vol. 87, no. 22, 28th November 1977, page 251, abstract no. 171964t, Columbus, Ohio, US; N.C. KOTHARI et al.: "Strenght properties of concrete containing randomly oriented steel fibers", & MET., ANNU. CONF. AUSTRALAS. INST. MET., 30th 1977, 4B3-4B4 | 1,2,4 | |
| | --- | | |
| Y | US-A-3 400 507  (C.M. McCHESNEY) <br> * Abstract; column 2, lines 31-37 * | 1-3 | TECHNICAL FIELDS SEARCHED (Int. Cl.4) |
| | --- | | C 04 B   14/00 |
| A | DE-A-2 930 939  (HEIDELBERGER ZEMENT) <br> * Page 7, lines 7-20 * | 1-4 | C 04 B   20/00 <br> E 04 C    5/00 |
| | --- | | |
| A | GB-A-  894 946  (COMMONWEALTH SCIENT. & IND. RESEARCH ORG.) <br> * Page 1, lines 27-42; claim 1 * | 1,2,4 | |
| | --- | | |
| A | GB-A-  829 051  (SIPOREX) | | |
| | ---                    -/- | | |

The present search report has been drawn up for all claims

| Place of search | Date of completion of the search | Examiner |
|---|---|---|
| THE HAGUE | 02-04-1987 | DAELEMAN P.C.A. |

# European Patent Office

## EUROPEAN SEARCH REPORT

EP 86 20 2210

| Category | Citation of document with indication, where appropriate, of relevant passages | Relevant to claim | CLASSIFICATION OF THE APPLICATION (Int. Cl.4) |
|---|---|---|---|
| A | GB-A- 693 287 (CONCRETE PATENTS LTD) | - | |

----- 

TECHNICAL FIELDS SEARCHED (Int. Cl.4)

The present search report has been drawn up for all claims

| Place of search | Date of completion of the search | Examiner |
|---|---|---|
| THE HAGUE | 02-04-1987 | DAELEMAN P.C.A. |